# EUROPÄISCHE PATENTSCHRIFT

(11) **EP 0 981 467 B1**
(45) Veröffentlichungstag und Bekanntmachung des Hinweises auf die Patenterteilung: **05.09.2001**
(21) Anmeldenummer: 98933517.9
(22) Anmeldetag: 13.05.1998
(51) Int. Cl.: B60R 16/00

(54) **VERFAHREN ZUR MANIPULATIONSSICHEREN KONFIGURIERUNG EINES KFZ-STEUERGERÄTES SOWIE STEUERGERÄT**
METHOD FOR MANIPULATION-PROOF CONFIGURATION OF A MOTOR VEHICLE CONTROL DEVICE AND A CONTROL DEVICE
PROCEDE POUR LA CONFIGURATION D'UN APPAREIL DE COMMANDE DE VEHICULE AUTOMOBILE AVEC PROTECTION CONTRE LES MANIPULATIONS, AINSI QU'APPAREIL DE COMMANDE

(30) Priorität: 15.05.1997 DE 19720285
(43) Veröffentlichungstag der Anmeldung: 01.03.2000
(73) Patentinhaber: ROBERT BOSCH GMBH, 70442 Stuttgart (DE)
(72) Erfinder: MILLER, Norbert, D-74232 Abstatt (DE); WALTER, Klaus, D-74321 Bietigheim (DE)
(86) Internationale Anmeldenummer: DE9801325
(87) Internationale Veröffentlichungsnummer: WO9851538

(56) Entgegenhaltungen:
- EP-A2- 0 392 411
- WO-A1-89/04785
- US-A- 5 278 547

## Beschreibung

### Stand der Technik

Die Erfindung geht aus von einem Steuergerät bzw. einem Verfahren nach der Gattung der unabhängigen Ansprüche 1 und 10. Aus der EP 376 983 B1 ist ein Steuergerät bekannt, welches zur Ausführung einer Vielzahl von Funktionen vorbereitet ist, und das sich nach Erstmontage in einem Fahrzeug auf einen Auslösebefehl hin entsprechend den im Fahrzeug benötigten Funktionen konfiguriert. Nicht benötigte Funktionen bleiben inaktiv. Das Steuergerät läßt sich als Universalsteuergerät für eine Vielzahl von Fahrzeugtypen einsetzen. Allerdings eröffnet das prinzipielle Vorhandensein möglicher, jedoch nichtaktivierter Funktionen auch nichtautoriersierten Personen grundsätzlich die Möglichkeit, den vom Hersteller ursprünglich zur Verfügung gestellten Funktionsumfang zu erweitern und beispielsweise vom Hersteller nicht zugelassene Komponenten einzusetzen. Hierzu ist nur erforderlich den nichtflüchtigen Speicher, in dem die jeweils geltende Steuergerätekonfiguration abgelegt ist, zu manipulieren.

Es ist Aufgabe der vorliegenden Erfindung, ein Steuergerät sowie ein Verfahren zur Konfigurierung einer Steuergeräteanordnung anzugeben, welche eine einmal festgelegte Konfiguration gegen nichtautorisierte Änderungen besser schützen.

Diese Aufgabe wird gelöst durch ein Verfahren mit den Merkmalen des Anspruchs 1 sowie ein Steuergerät mit den Merkmalen des Anspruchs 2. Indem zur Aktivierung einer vorbereiteten Funktion neben dem Fahrzeugsteuergerät wenigstens eine weitere im Fahrzeug vorhandene Komponente benötigt wird, erschwert das erfindungsgemäße Steuergerät eine nichtautorisierte Änderung einer festgelegten Konfiguration erheblich, weil dazu nunmehr wenigstens zwei Fahrzeugelemente abgestimmt aufeinander manipuliert werden müssen. Als Komponente zur Ablage von Aktivierungsinformationen zu im Steuergerät vorbereiteten Funktionen eignet sich besonders ein in Neufahrzeugen ohnehin meist vorhandener Immobilizer bzw. Wegfahrsperrensteuergerät. Für die erfindungsgemäße Sicherung geeignete Funktionen sind z.B. ein Tempomat oder eine Antischlupfregelung. Vorteilhaft ist es, eine Konfiguration nur in Abhängigkeit vom Zugang eines extern einzugebenden Quittungssignales abzuspeichern, um so beispielsweise einen Probebetrieb des Fahrzeugs bzw. der Steuergeräteanordnung zu ermöglichen.

Ein Ausführungsbeispiel der Erfindung wird nachfolgend unter Bezugnahme auf die Zeichnung näher erläutert.

### Zeichnung

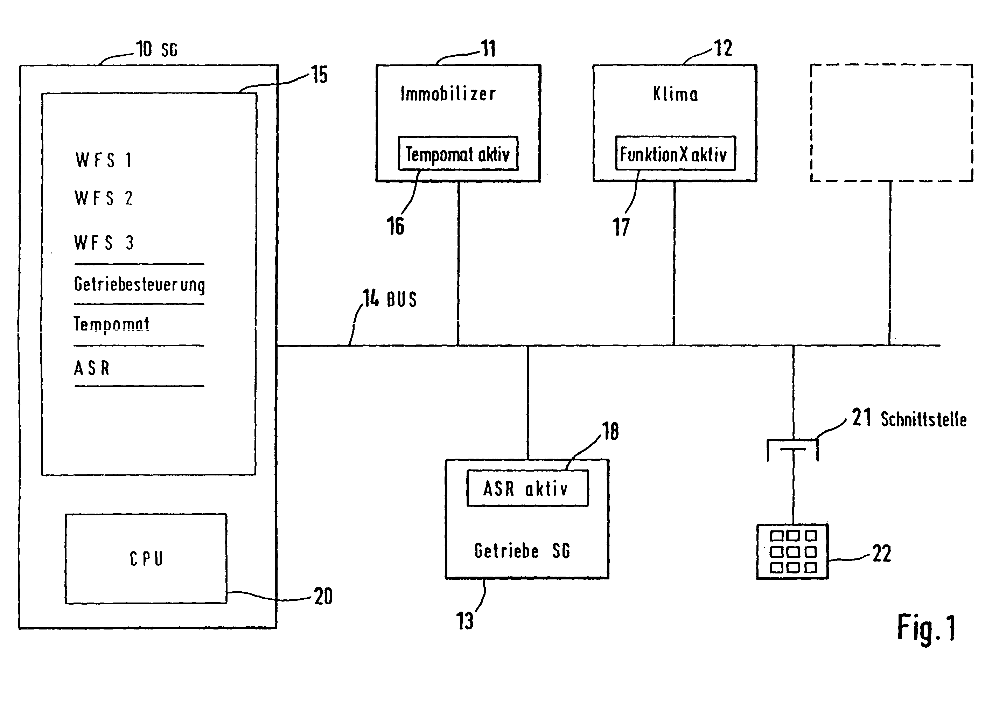

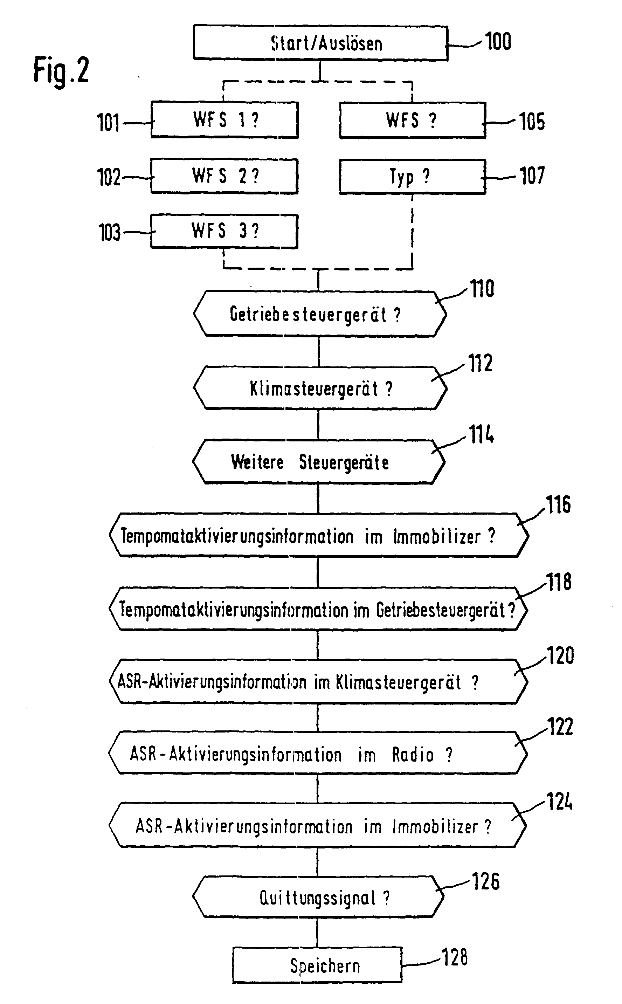

Es zeigen Figur 1 ein Blockschaltbild einer Fahrzeugsteuergeräteanordnung, Figur 2 ein Flußdiagramm eines Konfigurierungsvorganges.

### Beschreibung

Figur 1 zeigt ein im folgenden Motorsteuergerät genanntes Fahrzeugsteuergerät 10, daß über einen Bus, etwa einen CAN-Bus mit weiteren in einem Fahrzeug vorhandenen Komponenten-Steuergeräten verbunden ist, etwa einem Immobilizer 11, einem ABS-Steuergerät, einer Klimaanlagensteuerung 12, oder einem intelligenten Getriebesteuergerät 13. Steuergeräte in diesem Sinne können auch nicht eigentlich steuernde elektische Komponenten wie das Radio sein. Das Motorsteuergerät 10 verfügt über eine zentrale Prozessoreinheit 20 zur Durchführung der von dem Motorsteuergerät 10 wahrgenommenen Fahrzeugfunktionen, sowie einen Speicher 15, worin die Funktionen in Form von digitalen Informationen abgelegt sind. Neben unverzichtbaren betriebsrelevanten Funktionen, insbesondere solchen zur eigentlichen Motorsteuerung, befinden sich im Speicher 15 ein Verzeichnis der über den Bus 14 verbundenen Steuergeräte 11, 12, 13, sowie eine Vielzahl von vorbereiteten, optionalen Funktionen, welche abhängig von der speziellen Ausgestaltung des Fahrzeuges, in welches das Steuergerät 10 eingebaut ist, aktiviert werden. Solche optionalen Funktionen sind etwa die Wegfahrsperre, ein Tempomat oder eine Antischlupfregelung. Jede dieser Funktionen kann in Varianten vorhanden sein. Bezüglich der Funktionen Wegfahrsperre sind beispielsweise die Varianten Fahrzeug ohne Wegfahrsperre, Fahrzeug mit Wegfahrsperre mit modellspezifischem Code oder Fahrzeug mit Wegfahrsperre mit fahrzeugspezifischem Code denkbar. Ebenso könnten Tempomatfunktionsvarianten mit unterschiedlichen Charakteristiken vorgesehen sein. Desweiteren kann eine optionale Funktion auch die Inbetriebnahme eines an den Bus angeschlossenen Komponentensteuergerätes bewirken. Die vorgenannten Beispiele für vorbereitete Funktionen bilden keine abschließende Aufzählung, es sind beliebige weitere Funktionen vorsehbar. Jeder der vorbereiteten Funktionen ist im Speicher 15 ferner ein Platz zugeordnet, wo eingetragen wird, ob eine Funktion aktiviert wurde, und, soweit die Funktion die Zuschaltung einer weiteren Komponente am Bus 14 betrifft, ob die Komponente vorhanden ist.

Die mit dem Motorsteuergerät 10 verbundenen Komponentensteuergeräte 11, 12 und 13 besitzen ebenfalls jeweils eine, der Übersichtlichkeit wegen nicht dargestellte zentrale Prozessoreinheit sowie einen Speicher 16, 17, 18. Darin ist jeweils eine Aktivierungsinformation eingetragen, mittels derer eine im Motorsteuergerät 10 vorhandene optionale Funktion aktivierbar ist. Beispielsweise kann, wie in Figur 1 dargestellt, im Speicher 16 des Immobilizers 11 eine Information abgelegt sein, mittels derer die im Motorsteuergerät 10 vorbereitete, optionale Funktion Tempomat aktiviert wird. Oder im Speicher 18 des Getriebesteuergerätes 13 kann sich eine Information befinden, mittels derer die vorbereitet Funktion Antischlupfregelung (ASR) aktivierbar ist. Analog kann sich im Speicher 17 der Klimasteuerung 12 eine Aktivierungsinformation zur Aktivierung einer weiteren optionalen Funktion "X" befinden.

Der Bus 14 verfügt über eine Schnittstelle 21 zum Anschluß eines externen Gerätes 22, nittels dessen eine autorisierte Person Zugriff auf die Speicher 15, 16, 17, 18 hat, der Zugriff ist codegesichert.

Das Flußdiagramm in Figur 2 veranschaulicht eine mögliche Betriebsweise der in Figur 1 wiedergegebenen Anordnung. Nach Einbau der gesamten Steuergerätekonfigurationen 10, 11, 12, 13 in das Fahrzeug wird der Konfigurierungsvorgang durch einen, zweckmäßig von einem Bediener über die Schnittstelle 21 zugeführten, Startbefehl ausgelöst, Schritt 100. Das Motorsteuergerät 10 prüft daraufhin, ob eine Wegfahrsperrenfunktion zu aktivieren ist. Es setzt hierzu einen Befehl zum Feststellen der Anwesenheit eines Immobilizers 11 entsprechend dem ersten vorbereiteten Wegfahrsperrentyp (WFS1) in den Bus 14 ab, Schritt 101. Erfolgt darauf keine positive Rückmeldung, d.h. ist ein Immobilizer entsprechend dem ersten Wegfahrsperrentyp WFS1 nicht vorhanden, prüft das Motorsteuergerät 10, ob ein Immobilizers entsprechend dem Wegfahrsperrentyp 2 (WFS2) vorhanden ist. Gegebenenfalls fährt es fort und prüft die weiteren vorbereiteten Wegfahrsperrentypen, Schritt 103. Erfolgt auf ein Fragesignal eine positive Rückmeldung, vermerkt das Motorsteuergerät 10 die Anwesenheit eines entsprechenden Immobilizers 11 im Speicher 15.

Sodann prüft das Motorsteuergerät 10 die Anwesenheit des nächsten Komponentensteuergerätes am Bus 14, etwa eines Getriebesteuergerätes 13, Schritt 110. Es verfährt dabei analog zur Feststellung der Anwesenheit eines Immobilizers. In gleicher Weise ermittelt das Motorsteuergerät 10 anschließend die Anwesenheit aller weiteren mit dem Steuergerät 10 verbindbaren Steuergeräte, Schritt 112, 114. Anwesende Steuergeräte 12, 13 versieht es mit einem Vermerk im Speicher 15.

Nach Ermittlung aller an den Bus 14 angeschlossener Komponentensteuergeräte prüft das Motorsteuergerät 10, welche der vorbereiteten, optionalen Funktionen tatsächlich zu aktivieren sind. Es sendet hierzu zu der ersten im Speicher 15 eingetragenen optionalen Funktion, etwa der Tempomatfunktion, ein Anforderungssignal an ein erstes der anwesenden Steuergeräte, z.B. den Immobilizer 11, um dieses zu veranlassen, eine Aktivierungsinformation zur Aktivierung der optionalen Funktion an das Motorsteuergerät 10 rückzusenden, Schritt 116. Das Steuergerät, an das das Anforderungssignal gesendet wird, ist durch die vorbereitete Funktion bestimmt. Ist im befragten Steuergerät, etwa dem Immobilizer 11, eine Aktivierungsinformation vorhanden, und sendet es sie an das Motorsteuergerät 10 zurück, aktiviert jenes die betroffene Funktion, d.h. etwa die Funktion Tempomat.

Vorgesehen sein kann, eine Aktivierungsinformation nicht in einem fest der optionalen Funktion zugeordneten Komponentensteuergerät zu hinterlegen, etwa die Aktivierung des Tempomaten im Immobilizer 11, sondern wahlweise in einem von mehreren Steuergeräten, etwa wahlweise im Immobilizer 11 oder im Getriebesteuergerät 13. Das Motorsteuergerät 10 prüft in diesem Fall bei negativer Rückmeldung von dem ersten geprüften Komponentensteuergerät, ob eine bestimmte Aktivierungsinformation in einem anderen anwesenden Steuergerät vorhanden ist. Beispielsweise erfolgt eine Prüfung, ob eine Aktivierungsinformation zur Aktivierung der Funktion Tempomat im Getriebesteuergerät 13 vorhanden ist, wenn sie im Immobilizer 11 nicht abgelegt ist, Schritt 118.

In gleicher Weise wie vorstehend am Beispiel der Funktion Tempomat beschrieben, prüft das Motorsteuergerät 10 anschließend das Vorliegen von Aktivierungsinformationen zu den weiteren im Steuergerät 10 vorbereiteten Funktionen. Beispielsweise prüft es die Klimasteuerung 12 auf Vorliegen einer Aktivierungsinformation zur vorbereiteten Funktion ASR, Schritt 120, anschließend, falls diese Prüfung negativ und eine wahlweise Abspeicherung in einem anderen Komponentensteuergerät möglich ist, ob eine entsprechende Aktivierungsinformation in einem anderen Komponentensteuergerät vorhanden ist, Schritt 122.

Vorgesehen sein kann auch, mehrere Aktivierungsinformationen zur Aktivierung verschiedener im Motorsteuergerät 10 vorbereiteter Funktionen in demselben Steuergerät, beispielsweise dem Immobilizer 11, abzulegen, Schritt 124.

Alle vorbereiteten Funktionen im Speicher 15, zu denen das Motorsteuergerät 10 das Vorliegen einer Aktivierungsinformation ermittelt, versieht es mit einem Vermerk, wodurch die jeweiligen Funktionen aktiviert sind. Die nach Prüfung aller vorbereiteter Funktionen vollständig festgelegte Steuergerätekonfiguration wird anschließend gegen Löschen geschützt, Schritt 128. Hierzu wird über das externe Bedienungsgerät 22 ein Quittungssignal eingegeben, Schritt 126. Alternativ kann die Konfigurationsabspeicherung durch die Anwesenheit eines bestimmten Komponentensteuergerätes ausgelöst werden. Beim Festeinschreiben der Konfiguration erfolgt über das externe Bediengerät 22 zweckmäßig eine Visualisierung der im Speicher 15 vorhandenen Konfiguration.

Der bei der Erstinbetriebnahme durchgeführte Konfigurationsvorgang kann während des nachfolgenden Fahrzeugroutinebetriebes auf jeweils besondere Veranlassung eines Benutzers oder regelmäßig mit dem Ziel der Verifizierung wiederholt werden. Ergibt sich dabei eine Abweichung zu der im Speicher 15 abgelegten Konfiguration, können eine Fehlermeldung oder weitergehende, den Fahrzeugbetrieb einschränkende Maßnahmen vorgesehen sein. Auf diese Weise läßt sich beispielsweise der Austausch eines eine Aktivierungsinformation beinhaltenden Steuergerätes 11, 12, 13 gegen ein nicht autorisiertes, keine Aktivierungsinformation beinhaltendes Steuergerät bemerken.

Alternativ zu der beschriebenen Einzelprüfung der zugehörigen Komponentensteuergeräte auf Anwesenheit gemäß den Schritten 101 bis 103 kann vorgesehen sein, daß die Komponentensteuergeräte 11, 12, 13 auf ein Prüfsignal hin, Schritt 105, dem Motorsteuergerät 10 direkt ihren Typ mitteilen, Schritt 107. Beispielsweise antwortet der Immobilizer 11 hierbei durch Rücksenden der Typangabe WFS1, WFS2,... Das vorbeschriebene Konzept ist ferner nicht auf eine Durchführung unter der Kontrolle des Motorsteuergerätes 10 beschränkt. Es ist sinngemäß ebenso auf jedes andere Komponentensteuergerät sowie auf andere in einem Fahrzeug vorhandene Verbünde von Steuergeräten und intelligenten Komponenten übertragbar.

## Patentansprüche

1. Verfahren zur Konfigurierung eines Steuergerätes in einer Steuergeräteanordnung aus wenigstens zwei miteinander verbundenen Steuergeräten, wovon eines ein Fahrzeugsteuergerät (10), das andere ein Komponentensteuergerät (11,12,13) ist, wobei das Fahrzeugsteuergerät (10) zur Ausführung einer Vielzahl von Funktionen vorbereitet ist, von denen wenigstens eine durch ein externes Aktivierungsinformation zu aktivieren ist, gekennzeichnet durch folgende Schritte:
- Einspeichern einer Aktivierungsinformation zu einer im Fahrzeugsteuergerät (10) vorbereiteten Funktion in ein Komponentensteuergerät (11, 12, 13),
- Auslösen einer vom Fahrzeugsteuergerät (10) an ein Komponentensteuergerät (11, 12, 13) abzugebenden Anforderung zur Feststellung, ob dort eine Aktivierungsinformation vorhanden ist,
- Freischalten einer vorbereiteten Funktion im Fahrzeugsteuergerät (10) bei Eingang einer zugehörigen Aktivierungsinformation im Fahrzeugsteuergerät.

2. Fahrzeugsteuergerät zur Durchführung des Verfahrens nach Anspruch 1, **dadurch gekennzeichnet**, **daß** es
- zur Ausführung einer Vielzahl von Funktionen vorbereitet ist und seinen Funktionsumfang durch Aktivieren ausgewählter vorbereiteter Funktionen selbst konfiguriert,
- wobei zur Aktivierung einer vorbereiteten Funktion der Zugang einer Aktivierungsinformation erforderlich ist, welche in einem mit dem Fahrzeugsteuergerät (10) verbundenen Komponentensteuergerät (11, 12, 13) abgelegt und vom Fahrzeugsteuergerät (10) von dort anzufordern ist.

3. Steuergerät nach Anspruch 2, **dadurch gekennzeichnet**, **daß** eine vorbereitete Funktion die des Tempomats ist.

4. Steuergerät nach Anspruch 2, **dadurch gekennzeichnet**, **daß** eine vorbereitete Funktion die einer Antischlupfregelung ist.

5. Steuergerät nach Anspruch 2, **dadurch gekennzeichnet**, **daß** eine vorbereitete Funktion die Inbetriebnahme eines Komponentensteuergerätes bewirkt.

6. Steuergerät nach Anspruch 2, **dadurch gekennzeichnet**, **daß** es eine Konfiguration von miteinander verbundenen Steuergeräten (10, 11, 12, 13, 14) und aktivierten vorbereiteten Funktionen nicht löschbar abspeichert, wenn ihm ein externes Quittungssignal (126) zugeht.

7. Steuergerät nach Anspruch 2, **dadurch gekennzeichnet**, **daß** es eine Konfiguration aus miteinander verbundenen Steuergeräten und aktivierten vorbereiteten Funktionen nicht löschbar abspeichert, wenn es die Anwesenheit eines vorbestimmten Komponentensteuergerätes (11, 12, 13) feststellt.

8. Steuergerät nach Anspruch 2, **dadurch gekennzeichnet**, **daß** es die die Konfiguration seines Funktionsumfanges während des Fahrzeugroutinebetriebes in regelmäßigen Abständen wiederholt.

9. Steuergerät nach Anspruch 2, **dadurch gekennzeichnet**, **daß** es im Falle einer Abweichung zwischen dem zuletzt festgestellten Funktionsumfang und einem früher festgestellten Funktionsumfang den Fahrzeugbetrieb einschränkt.

10. Steuergeräteanordnung zur Durchführung des Verfahrens nach Anspruch 1 mit einem Fahrzeugsteuergerät sowie einem damit verbundenen Komponentensteuergerät, **dadurch gekennzeichnet, daß** das Komponentensteuergerät ein Immobilizer (11) ist.

## Claims

1. Method for configuring a controller in a controller arrangement comprising at least two controllers which are connected to one another, one of which is a vehicle controller (10) and the other is a component controller (11, 12, 13), in which case the vehicle controller (10) is prepared for carrying out a large number of functions, at least one of which can be activated by external activation information, characterized by the following steps:
- storage of activation information relating to a function, which is prepared in the vehicle controller (10), in a component controller (11, 12, 13),
- initiation of a request, which can be emitted from the vehicle controller (10) to a component controller (11, 12, 13), in order to find out whether there is any activation information there,
- enabling of a prepared function in the vehicle controller (10) when associated activation information is received in the vehicle controller.

2. Vehicle controller for carrying out the method according to Claim 1, **characterized in that** said vehicle controller
- is prepared for carrying out a large number of functions and configures its own functional scope by activation of selected, prepared functions,
- in which case, in order to activate a prepared function, access is required to activation information which is stored in a component controller (11, 12, 13) which is connected to the vehicle controller (10), and which can be requested from there by the vehicle controller (10).

3. Controller according to Claim 2, **characterized in that** one prepared function is that of the Tempomat.

4. Controller according to Claim 2, **characterized in that** one prepared function is that for traction control.

5. Controller according to Claim 2, **characterized in that** one prepared function results in a component controller being started up.

6. Controller according to Claim 2, **characterized in that** said controller stores a configuration of controllers (10, 11, 12, 13, 14) which are connected to one another and of activated, prepared functions in non-erasable form when it receives an external acknowledgement signal (126).

7. Controller according to Claim 2, **characterized in that** said controller stores a configuration of controllers which are connected to one another and of activated prepared functions in non-erasable form when it finds that a predetermined component controller (11, 12, 13) is present.

8. Controller according to Claim 2, **characterized in that** said controller repeats the configuration process of its functional scope at regular intervals during routine vehicle operation.

9. Controller according to Claim 2, **characterized in that**, in the event of any discrepancy between the most recently found functional scope and a previously found functional scope said controller restricts vehicle operation.

10. Controller arrangement for carrying out the method according to Claim 1 having a vehicle controller and having a component controller connected to it, **characterized in that** the component controller is an immobilizer (11).

## Revendications

1. Procédé de configuration d'un appareil de commande dans un agencement d'appareil de commande se composant d'au moins deux appareils de commande reliés l'un à l'autre, dont l'un est un appareil de commande de véhicule (10) et l'autre est un appareil de commande de composant (11, 12, 13), l'appareil de commande (10) de véhicule étant préparé pour effectuer un grand nombre de fonctions, dont l'une au moins doit être activée par une information externe d'activation,
caractérisé par les séquences suivantes:
- mise en mémoire d'une information d'activation pour une fonction préparée dans l'appareil de commande (10) du véhicule dans un appareil de commande (11, 12, 13) de composant,
- déclenchement d'un appareil de commande de véhicule (10) sur requête à délivrer à un appareil de commande de composant (11, 12, 13), pour déterminer s'il y a à cet endroit une information d'activation,
- libre branchement d'une fonction préparée dans l'appareil de commande (10) du véhicule lors de l'entrée d'une information d'activation correspondante dans l'appareil de commande du véhicule.

2. Appareil de commande de véhicule servant à la mise en oeuvre du procédé selon la revendication 1,
**caractérisé en ce que**
- l'appareil est préparé pour effectuer un grand nombre de fonctions et il configure lui-même son champ de fonctions en activant des fonctions préparées et sélectionnées,
- l'arrivée d'une information d'activation est nécessaire pour activer une fonction préparée, information qui est déposée dans un appareil de commande (11, 12, 13) relié à l'appareil de commande (10) du véhicule et qui est à fournir à partir de là par l'appareil de commande (10) du véhicule.

3. Appareil de commande selon la revendication 2,
**caractérisé en ce qu**'
une fonction préparée est celle de temporisation.

4. Appareil de commande selon la revendication 2,
**caractérisé en ce qu**'
une fonction préparée est celle d'une régulation anti-patinage.

5. Appareil de commande selon la revendication 2,
**caractérisé en ce qu**'
une fonction préparée provoque la mise en service d'un appareil de commande de composant.

6. Appareil de commande selon la revendication 2,
**caractérisé en ce que**
l'appareil met en mémoire de façon à ne pas pouvoir l'effacer une configuration d'appareils de commande (10, 11, 12, 13, 14) reliés les uns aux autres et de fonctions préparées activées, quand on lui amène un signal externe (126) d'accusé de réception.

7. Appareil de commande selon la revendication 2,
**caractérisé en ce que**
l'appareil met en mémoire de façon à ne pas pouvoir l'effacer une configuration, se composant d'appareils de commande reliés les uns aux autres et de fonctions préparés, activées, quand il constate la présence d'un appareil de commande (11, 12, 13) de composant prédéterminé.

8. Appareil de commande selon la revendication 2,
**caractérisé en ce que**
l'appareil répète la configuration de son champ de fonction pendant le fonctionnement de routine du véhicule à intervalles réguliers.

9. Appareil de commande selon la revendication 2,
**caractérisé en ce que**
l'appareil limite le fonctionnement du véhicule dans le cas d'un écart entre le champ de fonctions déterminé en dernier et un champ de fonctions déterminé plus tôt.

10. Agencement d'appareil de commande pour la mise en oeuvre du procédé selon la revendication 1, comprenant un appareil de commande de véhicule ainsi qu'un appareil de commande de composant relié avec celui-ci,
**caractérisé en ce que**
l'appareil de commande de composant est un immobiliseur (11).
